Europäisches Patentamt

European Patent Office

Office européen des brevets

(19)

(11)　EP 1 095 753 B1

(12)　EUROPEAN PATENT SPECIFICATION

(45) Date of publication and mention
of the grant of the patent:
**11.12.2002　Bulletin 2002/50**

(51) Int Cl.[7]: **B29C 45/50**

(21) Application number: 00309196.4

(22) Date of filing: **19.10.2000**

(54) **Driving device using linear motor**

Antriebsvorrichtung unter Verwendung eines Linearmotors

Dispositif d' entraînement utilisant un moteur linéaire

(84) Designated Contracting States:
DE

(30) Priority: **26.10.1999　JP 30430899**

(43) Date of publication of application:
**02.05.2001　Bulletin 2001/18**

(73) Proprietor: **Fanuc Ltd**
**Minamitsuru-gun, Yamanashi 401-0597 (JP)**

(72) Inventors:
• **Ito, Susumu**
**Hino-shi, Tokyo, 191-0065 (JP)**
• **Inaba, Yoshiharu**
**Kawasaki-shi, Kanagawa, 214-0038 (JP)**

• **Ban, Yonbon**
**Kangbuk-ku, Seoul (KR)**

(74) Representative: **Billington, Lawrence Emlyn**
**Haseltine Lake & Co.**
**Imperial House**
**15-19 Kingsway**
**London WC2B 6UD (GB)**

(56) References cited:
DE-C- 19 731 833　　　US-A- 3 735 717
US-A- 4 234 831　　　US-A- 4 824 255

• **PATENT ABSTRACTS OF JAPAN vol. 1999, no. 08, 30 June 1999 (1999-06-30) & JP 11 058472 A (TOSHIBA MACH CO LTD), 2 March 1999 (1999-03-02)**

## EP 1 095 753 B1

**Description**

The present invention relates to a driving device for linearly moving a movable part of a machine according to the preamble of claim 1.

An example of a driving device for linearly moving at least two linear-motion elements, in accordance with the preamble of attached claim 1, is provided by US-A-3 735 717.

Hydraulic actuators and rotational electric motors have been generally adopted as driving sources for various industrial machines such machine tools, manufacturing machines and injection molding machines. The hydraulic actuator does not have high energy-efficiency and controllability, and requires operating oil. The rotational electric motor has been recently employed as a driving source for a robot and an injection molding machine,which have conventionally employed the hydraulic actuator as a driving source.

The rotational electric motor has high energy-efficiency and controllability and requires no operating oil, but it is difficult to obtain a highspeed linear motion since an outputted rotational motion has to be converted into a linear motion by means of a conversion mechanism such as a ball screw in order to linearly move a movable part of the machine. For example, an injection molding machine for molding a product of extremely little thickness requires a high injection speed, but it is difficult to obtain such high injection speed by a rotational electric motor. Therefore, an hydraulic actuator has to be employed as a driving source of such type of injection molding machine. In view of the above, an electrically operating injection molding machine employing a linear motor has been developed, as disclosed in Japanese Patent Publication No. 11-58468. However, there has not been provided any practical satisfactory injection molding machine employing a linear motor.

By employing a linear motor as a driving source of a linearly movable part of the machine, the energy-efficiency and controllability are made high and a high speed linear motion is achieved, but there is a problem that a large reactive force is applied to the machine, which may cause damage to parts of the machine and deteriorate control characteristics.

Since an outputted rotational motion of a rotational electric motor is converted into a linear motion by means of a conversion mechanism so as to drive the movable part linearly, most of a reactive force of a driving force for the linear motion of the movable part of the machine is applied to a housing of the motor as a rotational force to rotate the housing in a direction opposite to the direction of the rotational driving force- Any reactive force acting linearly on the conversion mechanism and the motor housing is so small as to be negligible compared with the rotational reactive force, which is transmitted to a base of the machine on which the motor housing is mounted.

For example, in the case of an injection molding machine where an injection screw is linearly driven by a rotational electric motor through a ball screw, a linear reactive force acting on a base or frame of an injection unit of an injection molding machine is quite small. A reactive force of the driving force for causing linear motion of the injection screw acts on the injection unit in acceleration and deceleration as the rotational reactive force. The linear reaction force is so small as not to move the injection unit backward to make a nozzle at the distal end of a heating cylinder part from a mold, nor to move the injection unit forward to make the nozzle to be pressed towards the mold, to thereby cause damage.

Contrary to the above, when the linear motor is employed as a driving source of the linearly movable part, such as the injection screw of the injection molding machine, most of a linear driving force or a thrust of the linear motor acts directly on a housing of the linear motor. Thus, a linear reactive force of several tons force (tonf) is applied to the base on which the linear motor is mounted in acceleration and deceleration. This linear reactive force may cause damage to the elements of the machine. For example, in the case of an injection molding machine, the nozzle may move apart from the mold or be pressed to the mold to cause damage to the mold and the nozzle.

It is an object of the invention to at least compensate in part for this damaging reactive force.

This object is achieved according to the invention by the driving device as defined in claim 1.

Particular embodiments of the invention are the subject of the dependent claims.

A driving device of the present invention comprises: at least two linear-motion elements supported linearly movably in opposite directions, one of the linear-motion elements being connected to a movable part of a machine; at least one linear motor for applying opposite thrusts to a first linear-motion element and a second linear-motion element of at least two linear-motion elements; and a linear-motion interconnecting mechanism for interconnecting the opposite linear motions of the first and second linear-motion elements.

The first linear-motion element may comprise one of a primary member and a secondary member of the linear motor, both supported linearly movably, and the second linear motion element may comprise the other of the primary and secondary members.

Alternatively, the first linear-motion element may comprise one of primary and secondary members of an obverse-motion linear motor, and the second linear-motion element may comprise one of primary and secondary members of a reverse-motion linear motor. A set of two linear motors disposed in confronting relation to each other may cooperatively constitute the obverse motion linear motor, and another set of two linear motors disposed in confronting relation to each other may cooperatively constitute the reverse-motion linear motor.

2

The primary member of the linear motor may have an excitation coil and the secondary member of the linear motor may have a magnet plate.

The linear motors may apply thrusts to the first and second linear-motion elements and further a third linear-motion element such that adjacent ones of the linear-motion elements move in directions opposite to each other, and the linear-motion interconnecting mechanism may interconnect the opposite motions of the adjacent ones of the linear-motion elements.

The linear-motion interconnecting mechanism may interconnect the opposite linear motions such that a ratio of a speed of a connection point between the linear-motion interconnecting mechanism and the first linear-motion element, to a speed of a connection point between the linear-motion interconnecting mechanism and the second linear-motion element is set to an inverse of a ratio of a total mass of elements moving with the first linear-motion element to a total mass of elements moving with the second linear-motion element.

The linear-motion interconnecting mechanism may comprise one of a linkage mechanism, a rack-gear-rack mechanism, a belt-pulley mechanism and a leverage mechanism.

Specifically, the linkage mechanism may be constituted by three links connected serially. The three links may comprise a first link connected to the first linear-motion element, a second link pivoted on a stationary axis and a third link connected to the second linear-motion element. In this case, a ratio of a distance between a first straight line passing a connection point of the first link with the first linear-motion element and a second straight line passing a pivot point of the second link, said first and second straight lines extending in the direction of thrust of said linear motor, to a distance between a third straight line passing a connection point of the third link with the second linear-motion element extending in the direction of thrust of the linear motor and the second straight line is set to an inverse of a ratio of a mass of all elements moving with the first linear-motion element to a mass of all elements moving with the second linear-motion element.

The driving device of the present invention is preferably applicable to an injection molding machine.

BRIEF DESCRIPTION OF THE DRAWINGS

FIG. 1 is a schematic view of a driving device for an injection unit of an injection molding machine according to a first embodiment of the present invention;
FIGS. 2a to 2c are schematic views showing an operation of the driving device shown in FIG. 1;
FIGS. 3a and 3b are detailed views of a linkage mechanism as a linear-motion interconnecting mechanism, shown in FIGS. 1, 2a-2c;
FIG. 4 is a schematic diagram showing operational states of the linkage mechanism;
FIGS. 5a to 5c are schematic views showing an operation of a driving device for an injection unit according to a second embodiment of the present invention;
FIG. 6a is an enlarged views of the linkage mechanism shown in FIGS. 5a to 5c, and FIG. 6b is schematic view showing a resultant force of thrusts;
FIGS. 7a to 7c are schematic views showing an operation of a driving device of an injection unit according to a third embodiment of the present invention;
FIGS. 8a to 8c are schematic views showing an operation of a driving device of an injection unit according to a fourth embodiment of the present invention;
FIGS. 9a to 9c are schematic views showing an operation of a driving device of an injection unit according to a fifth embodiment of the present invention;
FIGS. 10a to 10c are schematic views showing an operation of driving device of an injection unit according to a sixth embodiment of the present invention;
FIG. 11 shows operational states of the leverage of the linear-motion interconnecting mechanism shown in FIGS. 10a to 10c.

Embodiments of the present invention will be described as examples of a driving device for linearly moving an injection screw of an injection molding machine.

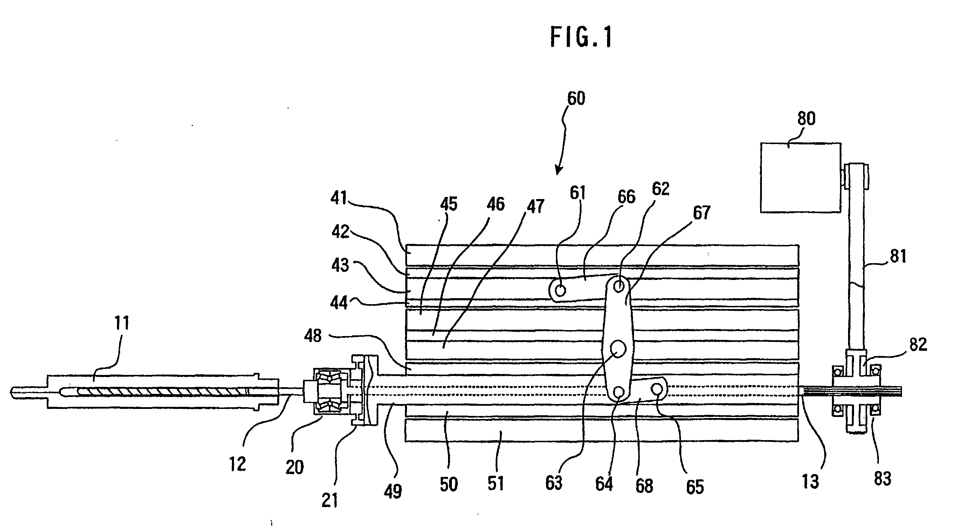

FIG. 1 shows a first embodiment of the present invention. In FIG. 1, an injection screw 12 is inserted in an injection cylinder 11 fixed to a frame or a base of an injection unit (not shown) and a rotational shaft 13 connected to the injection screw 12 is rotatably supported by a bearing block 20 and linearly movably supported on the frame or base of the injection unit. A frame 49 of a linear-motion member of first and second obverse-motion linear motors is fixed to the bearing block 20 through a load cell 21. The rotational shaft 13 is penetrated through the linear motion member 49 and connected to a belt pulley 82 by a spline engagement at a rear end thereof. The belt pulley 82 is driven by a screw- rotation motor 80 through a timing belt 81. A bearing 83 for supporting the belt pulley 82 and the screw

3

rotation motor 80 are fixed to the frame or base of the injection unit.

Magnet plates 48 and 50 of the first and second obverse-motion linear motors are respectively fixed to opposite sides of the linear motion frame 49. Stators 47 and 51 of the first and second obverse-motion linear motors are fixed to the frame or base of the injection unit in confronting relation to the magnet plates 48 and 50, respectively. An excitation coil is provided at each of the stators 47 and 51. Thus, the first obverse-motion linear motor is constituted by the magnet plate 48 on the linear motion frame 49 and the stator 47, and the second obverse-motion linear motor is constituted by the magnet plate 50 on the linear motion frame 49 and the stator 51. The linear motion frame 49 having the magnet plates 48 and 50 mounted thereon forms a common linear motion member of the first and second obverse-motion linear motors.

The stator 47 of the first obverse-motion linear motor is fixed to one side of a stator fixing plate 46 which is fixedly mounted on the frame or base of the injection unit. A stator 45 of a second reverse-motion linear motor is fixed on the opposite side of the stator fixing plate 46. A magnet plate 44 of the second reverse-motion linear motor is fixed to one side of a reverse-motion linear motion frame 43 to face the stator 45. The second reverse-motion linear motor is constituted by the stator 45 on the linear motion frame 43 and the magnet plate 44. A magnet plate 42 of a first reverse-motion linear motor is fixed to the other side of the reverse-motion linear motion frame 43. A stator 41 of the first reverse-motion linear motor is fixedly mounted on the injection unit frame to face the magnet plate 42. The first reverse-motion linear motor is constituted by the magnet plate 42 on the linear motion frame 43 and the stator 41.

The reverse-motion linear motion frame 43 having the magnet plates 42 and 44 forms a common linear-motion member of the first and second reverse-motion linear motors.

The linear motion frame 49 of the obverse-motion linear motors and the linear motion frame 43 of the reverse-motion linear motors are connected by a linear-motion interconnecting mechanism 60. The linear-motion interconnecting mechanism 60 may be connected to bracket members respectively fixed to the obverse-motion linear motion frame 49 and the reverse-motion linear motion frame 43. In this embodiment, the linear-motion interconnecting mechanism 60 comprises a linkage mechanism having three links 66, 67 and 68, and link pins 61, 62, 63, 64 and 65. The linkage mechanism is nearly symmetrical with respect to the link pin 63 fixed to the frame or base of the injection unit. The center link 67 is rotatably supported on the link pin 63 and respective ends of the links 66 and 68 are pivoted on the link pins 62 and 64 provided on opposite ends of the center link 67. The other ends of the links 66 and 68 are pivoted on the reverse-motion linear motion frame 43 and the obverse-motion linear motion frame 49 by the link pins 61 and 65, respectively.

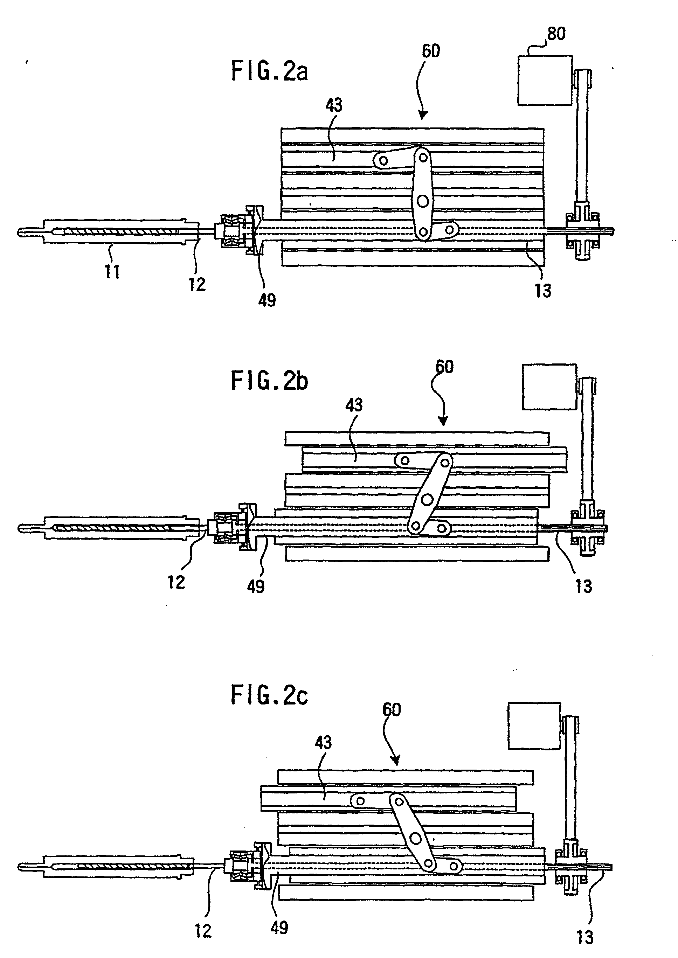

FIGS. 2a-2c depict operational states of the driving device shown in FIG. 1. FIG. 2a shows a state where the injection screw 12 is positioned at the center of a stroke of the linear motion, and FIG. 2b shows a state where the injection screw 12 is moved to a forward end of the stroke and FIG. 2c shows a state where the injection screw 12 is moved to a backward end of the stroke.

When the injection screw 12 is to be rotated for kneading and metering of resin in the cylinder 11, the screw rotation shaft 13 is driven by the screw rotation motor 80 through the timing belt 81 and the belt pulley 82 which is coupled to the shaft 13 by spline engagement.

When the injection screw 12 is to be linearly moved forward in the left-hand direction in FIGS. 2a-2c for injection of resin, the first and second reverse-motion linear motors are driven to produce backward thrust in the right-hand direction to move the reverse-motion linear motion frame 43 backward, and simultaneously the first and second obverse-motion linear motors are driven to produce forward thrust in the left-hand direction to move the linear motion frame 49 forward from the state shown in FIG. 2c to the state shown in FIG. 2b, so that the screw 12 linearly moves towards molds (not shown). The backward thrust of the reverse-motion linear motion frame 43 produced by the reverse-motion linear motors is converted by the linear-motion interconnecting mechanism 60 into a thrust of the obverse-motion linear motion frame 49 in the forward direction. Thus, the injection screw 12 is moved linearly by the thrusts of the four linear motors of the first and second obverse-motion linear motors and the first and second reverse-motion linear motors.

In the kneading and metering process where the injection screw 12 is rotated for kneading the resin to be molten in the injection cylinder 11, a backward force is produced on the injection screw 12 by the molten resin. Since a set back pressure is applied to the injection screw 12 in the forward direction by the linear motors, the injection screw 12 moves backward until the backward pressure by the molten resin balances the back pressure from the state shown in FIG. 2b to the state shown in FIG. 2c. When the injection screw 12 reaches a predetermined metering position, the linear motors are driven to move the injection screw 12 from the state shown in FIG. 2c to the state shown in FIG. 2a by driving the obverse-motion linear motors and the reverse-motion linear motors in the reversed direction, to inject the molten resin in the injection cylinder 11 into a cavity of the molds.

As described above, the obverse-motion linear motion frame 49 and the reverse-motion linear motion frame 43 are simultaneously driven in the opposite directions by the obverse-motion linear motors and the reverse-motion linear motors. The obverse-motion linear motion frame 49 with the magnet plates 48 and 50, the injection screw 12, the screw rotation shaft 13, the bearing block 20 and the load cell 21, which move with the obverse-motion linear motion frame 49 driven by the obverse-motion linear motors, will be referred to as obverse motion elements, and the reverse-motion linear motion frame 43 with the magnet plates 42 and 44 which move with the reverse-motion linear motion frame 43 driven by the reverse-motion linear motors, will be referred to as reverse motion elements.

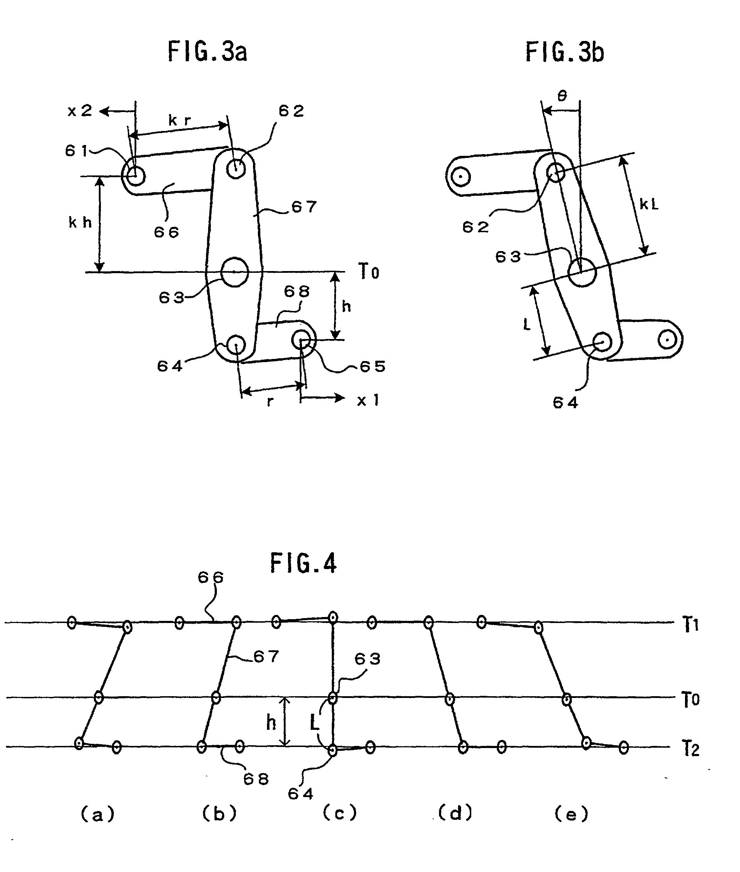

FIGS. 3a and 3b show details of the linear-motion interconnecting mechanism 60. As shown in FIGS. 3a and 3b, a distance between the link pin 65 and the link pin 64 is represented by "r", a distance between the link pin 61 and the link pin 62 is represented by "kr", a distance between the link pin 63 and the link pin 64 is represented by "L", a distance between the link pin 62 and the link pin 63 is represented by "kL", a distance between straight lines parallel to an axis of the screw rotational shaft 13 and passing centers of the link pins 63 and 65, respectively, is represented by "h", and a distance between straight lines parallel to the axis of the screw rotational shaft 13 and passing centers of the link pins 63 and 61, respectively, is represented by "kh". "k" represents a proportional coefficient.

Displacements of the link pin 65 and the link pin 61 are represented by x1 and x2, respectively, when the links 66, 67 and 68 are moved from the state shown in FIG. 3a to the state shown in FIG. 3b. These displacements x1 and x2 are calculated according to the following equations.

$$x1 = L\sin\theta + (r^2 - (L\cos\theta - h)^2)^{1/2} - (r^2 - (L - h)^2)^{1/2}$$

$$x2 = kL\sin\theta + (k^2r^2 - (kL\cos\theta - kh^2)^{1/2} - (k^2r^2 - (kL - kh)^2)^{1/2}$$

$$= k\{L\sin\theta + (r^2 - (L\cos\theta - h^2)^{1/2} - (r^2 - (L - h)^2)^{1/2}$$

$$= k \cdot x1$$

Thus, the displacements x2 and x1 have linear relationship with a proportional coefficient "k". The reactive force of the thrusts of the linear motors in acceleration and deceleration can be canceled by setting the value of "k" to be a ratio of the total mass m1 of the obverse motion elements moving with the link pin 65 to the total mass m2 of the reverse motion elements moving with the link pin 61.

According to the above consideration, the value of "k" is set as follows;

$$k = m1/m2 = x2/x1,$$

and thus

$$m1 \cdot x1 = m2 \cdot x2$$

In this equation, assuming that x1 and x2 are accelerations of the obverse motion elements and the reverse motion elements, respectively, "m1 • x1" is considered as a thrust balancing a fictitious inertial force of the obverse motion elements, and "m2 • x2" is considered as a thrust balancing a fictitious inertial force of the reverse motion elements. If the thrust of the obverse motion elements and the thrust of the reverse motion elements are equal, the linear reactive forces of the thrusts applied to the frame or base of the injection unit are made equal and thus canceled to cause no linear reactive force on the injection unit frame. In the above equations, assuming that x1 and x2 are velocities, the ratio (x1/x2) of the velocity of the obverse motion elements to the velocity of the reverse motion elements may be set an inversed ratio (m2/m1) of the total mass of the obverse motion elements to the total mass of the reverse motion elements.

On the basis of the above consideration, the proportional coefficient k is set as k = m1/m2 by adjusting the total mass m1 of the obverse motion elements and the total mass m2 of the reverse motion elements, and the position of the link pin 63 pivotally supporting the link 67.

FIG. 4 schematically shows an operational transition of the linkage mechanism 60 all over a stroke of the linear motion of the injection screw in the forward and backward directions. In the state (a), the injection screw is moved to the most forward position, and in the state (e) the injection screw is moved to the most backward position. In this embodiment, the distance "L" between the link pin 63 and the link pin 64 is set slightly longer than the distance "h" between straight lines To and T2 parallel to the axis of the screw rotational shaft 13 and passing the centers of the link pins 63 and 65, respectively. With this setting, in the state (c) which is the central position of the stroke defined by the positions (a) and (e), an angle between an extending direction of the link 66 and the thrust direction of the reverse-motion linear motors as indicated by the line T1, and an angle between an extending direction of the link 68 and the thrust direction of the obverse-motion linear motors as indicated by the line T2 are equal to each other to have the maximum value. Thus, the maximum value of the angles between the links 66 and 68 and the thrusts are made minimum, and a maximum value of the component force in the longitudinal direction of the link 67 produced when the thrusts by the respective linear motors are applied to the link pins 61 and 65 is made a minimum value.

In the foregoing embodiment, the magnet plates are attached to the linear motion members to form primary members of the linear motors and the excitation coils are arranged at the stators to form secondary members of the linear motors. Alternatively, the magnetic plates may be attached to the stators to form the secondary members and the excitation coils may be arranged at the linear motion members to form the primary members.

Also in the foregoing embodiment, the stators are arranged on both sides of each of the linear motion members, and two sets of linear motors having common linear motion members are provided, and the linear motion member of one set of linear motors is used for driving the injection screw, with the obverse-motion elements moving with the linear motion member. The reverse-motion movable elements comprise elements moving with the linear motion member of the other set of the linear motors in a direction opposite to the motion of the obverse-motion elements.

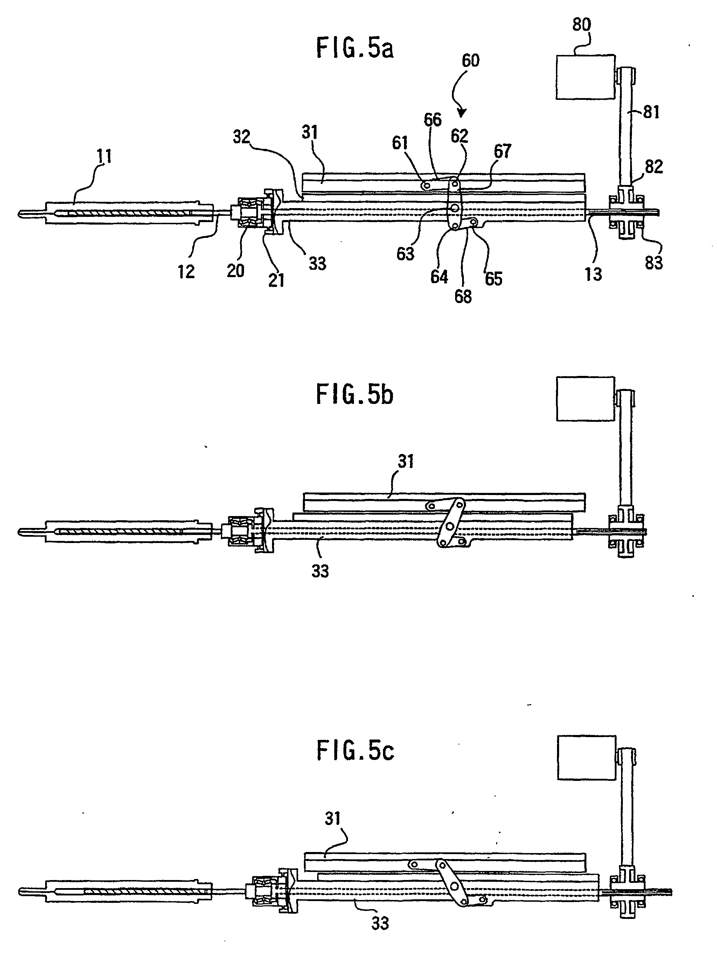

As an alternative arrangement, both of the primary member and the secondary member of one linear motor may be supported linearly movable on the injection unit frame and one of the primary and secondary members may be used as the obverse motion element and the other may be used as the reverse motion element. An example of such arrangement is shown in FIGS. 5a-5c as a second embodiment of the present invention.

In FIGS. 5a-5c, the injection cylinder 11, the injection screw 12, the screw rotational shaft 13, the bearing block 20, the load cell 21, the screw rotation motor 80, the timing belt 81 the belt pulley 82, the belt pulley supporting bearing 83 are the same elements as those in the first embodiment shown in FIG. 1. In this second embodiment, one linear motor is provided with its secondary member used as the obverse motion element and the primary member used as the reverse motion element. The primary member and the secondary member are interconnected by the linkage mechanism 60 as the linear-motion interconnecting mechanism.

A frame 33 of a secondary member of the linear motor, as the obverse motion element, is connected to the bearing block 20 through the load cell 21. The screw rotational shaft 13 is inserted through a through hole formed at a center of the linear motion frame 33. A magnet plate 32 of the linear motor is attached to a longitudinal side of the secondary member frame 33 and a primary member 31 of the linear motor is arranged to face the magnet plate 32. The primary member 31 is not fixed to the injection unit frame but supported linearly movable in a direction parallel to the moving direction of the secondary member frame 33.

The secondary member frame 33 and the primary member 31 are connected to each other by the linkage mechanism 60 as a linear-motion interconnecting mechanism. The arrangement of the linkage mechanism 60 is the same as that in the first embodiment. In this second embodiment, the screw rotational shaft 13, the injection screw 12, the bearing block 20, the load cell 21, the secondary member frame 33 and the magnet plate 32 constitute the obverse-motion members, and the primary member 31 constitutes the reverse-motion movable element. The positional arrangement of the link pins 61-65 of the linkage mechanism 60 are determined in accordance with the ratio k of the . total mass m1 of the obverse motion elements to the total mass m2, as in the first embodiment. In this embodiment, the position arrangement of the link pin 65 is in accordance with a relationship between the central axis of the injection screw 12 and a propelling axis of the linear motor.

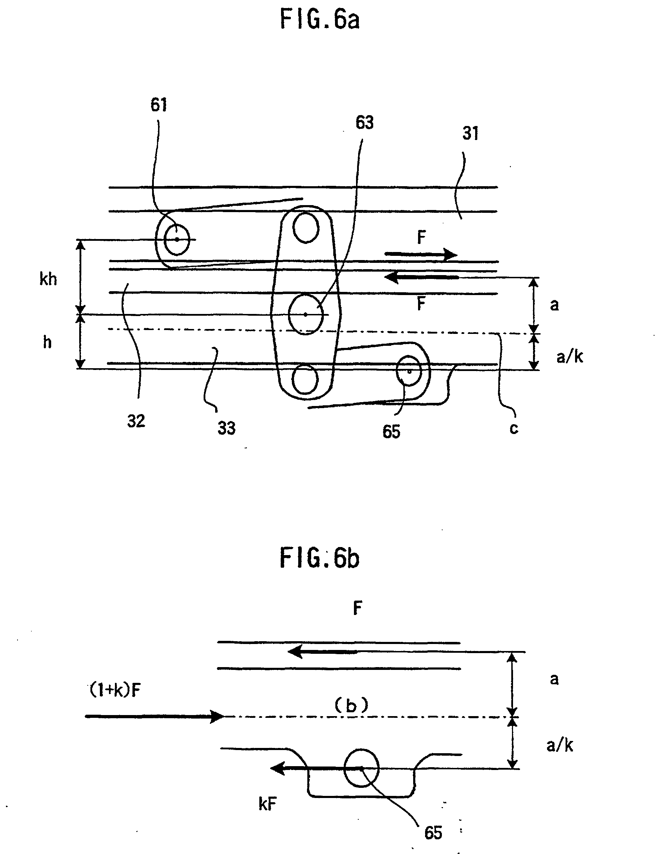

FIG. 6a shows details of the linkage mechanism 60 in the second embodiment shown in FIGS 5a-5c. The link pin 65 is positioned offset from the central axis C of the injection screw 12 to be displaced remotely from the stator 31. The link lin 65 is displaced by a distance a/k, where "a" represents a distance between a thrust axis of the linear motor and the central axis C of the injection screw 12. With this arrangement, the resultant thrust is applied to the obverse-motion linear motion frame at a position in the vicinity of the central axis C of the injection screw 12.

FIG. 6b shows the resultant thrust. A thrust kF is applied to the link pin 65 with F representing the thrust of the linear motor and "kh" and "h" respectively representing the distance between the link pins 63 and 61, and the distance between the link pins 63 and 65 in the direction perpendicular to the central axis C of the injection screw. Thus, the resultant force (1+k)F of the linear motor is applied in the vicinity of the central axis C of the injection screw since "d" represents a distance between the propelling axis of the linear motor and the central axis of the injection screw 12, and d/k represents the distance between a center of the rink pin 65 and the central axis of the injection screw 12.

In this embodiment, as in the first embodiment, the injection cylinder 11, the link pin 63 and the belt pulley supporting bearing 83 are fixed to the injection unit frame, and the injection screw 12 is rotated with the screw rotation shaft 13 through the timing belt 81, the belt pulley 82 and the spline connection between the belt pulley 82 and the screw rotation shaft 13 by driving the screw rotation motor 80. The primary member 31 and the secondary member 33 of the linear motor move linearly in the opposite directions to move the injection screw 12 forward and backward. FIG. 5b shows a state where the injection screw 12 is moved forward with the obverse motion elements including the secondary member 33 are moved forward and the reverse motion elements including the primary member 31 are moved backward. FIG. 5c shows a state where the injection screw 12 is moved backward with the obverse motion elements moved backward and the reverse motion elements forward.

In the second embodiment, only one linear motor is provided. An additional linear motor may be provided in this arrangement. For example, an additional linear motor may be provided symmetrically with respect to the central axis of the injection screw 12. The additional linear motor may be provided by fixing an additional magnet plate in the opposite side of the secondary member 33 and arranging an additional primary member to be linearly movable and facing the additional magnet plate. Further, a plurality of linear motors may be provided with their secondary members and primary members connected alternately. In these cases, the positional arrangement of the link pins of the linkage mechanism 60 are determined in accordance with a ratio k of the total mass of the obverse motion elements to the total mass of the reverse motion elements.

In the second embodiment, the secondary member of the linear motor is connected to the injection screw 12 as a movable part of the machine. Alternatively, the primary member of the linear motor may be connected to the injection screw 12 since both of the primary and secondary members are movable in this embodiment. Thus, the movable part of the machine may be connected to either of the primary member having an excitation coil and the secondary member having a magnet.

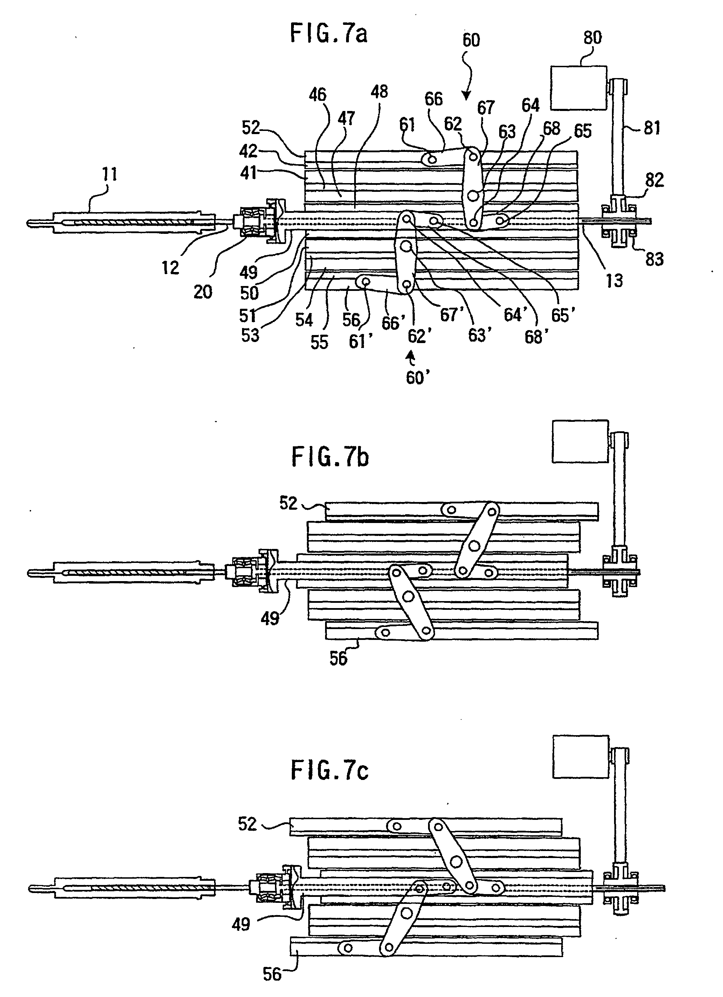

FIGS. 7a-7c show an arrangement of the third embodiment of the present invention. In this embodiment, linear motors are provided to be symmetrically with respect to the central axis of the injection screw.

The arrangement of the heating cylinder 11, the injection screw 12, the screw rotation shaft 13, the bearing block 20, the load cell 21, the linear motion frame 49 of the obverse-motion linear motors, the screw rotation motor 80, the timing belt 81, the. belt pulley 82, the belt pulley supporting bearing 83 are the same as that in the first embodiment.

A magnet plate 48 of a first obverse-motion linear motor is attached to one side of a first linear motion frame 49 and a stator 47 is attached to a stator mounting plate 46 to face the magnet plate 48 to constitute a first obverse-motion linear motor. A stator 41 is attached to the other side of the stator mounting plate 46 and a magnet plate 42 is attached to a second linear motion frame 52 to face the stator 41 to form a fist reverse-motion linear motor.

Further, a magnet plate 50 is attached to the other end of the first linear motion frame 49 and a stator 51 is attached to a stator mounting plate 53 to face the magnet plate 50, to constitute a second obverse-motion linear motor. A stator 54 is attached to the other side of the stator mounting plate 53 and a magnet plate 55 is attached to a third linear motion frame 54 to face the stator 54 to constitute a second reverse-motion linear motor.

A first linkage mechanism 60 is provided to connect the first linear motion frame 49 with the second linear motion frame 52, and a second linkage mechanism 60' is provided to connect the first linear motion frame 49 with the third linear motion frame 56. The structure of the second linkage mechanism 60' is the same as that of the first linkage mechanism 60.

In this third embodiment, the heating cylinder 11, the link pins 63 and 63' of the first linkage mechanism 60 and the second linkage mechanism 60', the stator mounting plates 46 and 53, the belt pulley supporting bearing 83, the screw rotation motor 80 are fixed to the injection unit frame. The injection screw 12 is rotated by the screw rotation motor 80 in the same manner as in the first embodiment.

FIG. 7a shows a state where the injection screw 12 is at the central position. FIG. 7b shows a state where the injection screw 12 is moved forward with the first linear motion frame 49 moved forward, the second linear motion frame 52 with the magnet plate 42 and the third linear motion frame 56 with the magnet plate 55 moved backward. FIG. 7c shows a state where the injection screw 12 is moved backward with the first linear motion frame 49 moved backward, and the second linear motion frame 52 and the third linear motion frame 56 moved forward.

In this third embodiment, the screw rotation shaft 13, the bearing block 20, the load cell 21, the first linear motion frame 49, the magnet plates 48 and 50 which move with the screw constitute obverse motion elements, and the second and third linear motion frame 52 and 56, the magnet plates 42 and 55 which move in a direction opposite to the direction of the obverse motion elements constitute reverse motion elements. The positional arrangement of the link pins of the first linkage mechanism 60 and the second linkage mechanism 60' are determined in accordance with the ratio k of the total mass of the obverse motion elements to the total mass of the reverse motion elements. The relative motion of the obverse motion elements and the reverse motion elements cancels the reactive force produced in acceleration and deceleration of the driving device.

In the first and second embodiments, the reactive force in the direction of the axis of the injection screw 12 is canceled but the reactive moment to rotate the injection unit is produced and received by the base of the machine. However, the reactive moment can be canceled since the linear motors are provided symmetrically with respect to the central axis of the injection screw 12.

Similarly to this embodiment, third and forth reverse-motion linear motors can be added to the arrangement of the first embodiment so that these additional linear motors are arranged symmetrically with respect to the central axis of the injection cylinder 12. Specifically, in FIG. 1, elements corresponding to the stator 41, the magnet plate 42, the linear motion frame 43, the magnet plate 44, the stator 45 and the stator mounting plate 46 are disposed under the stator 51 symmetrically with respect to the central axis of the injection screw 12, and the additional linear motion frame and the linear motion frame 49 is connected with each other by an second linkage mechanism 60'.

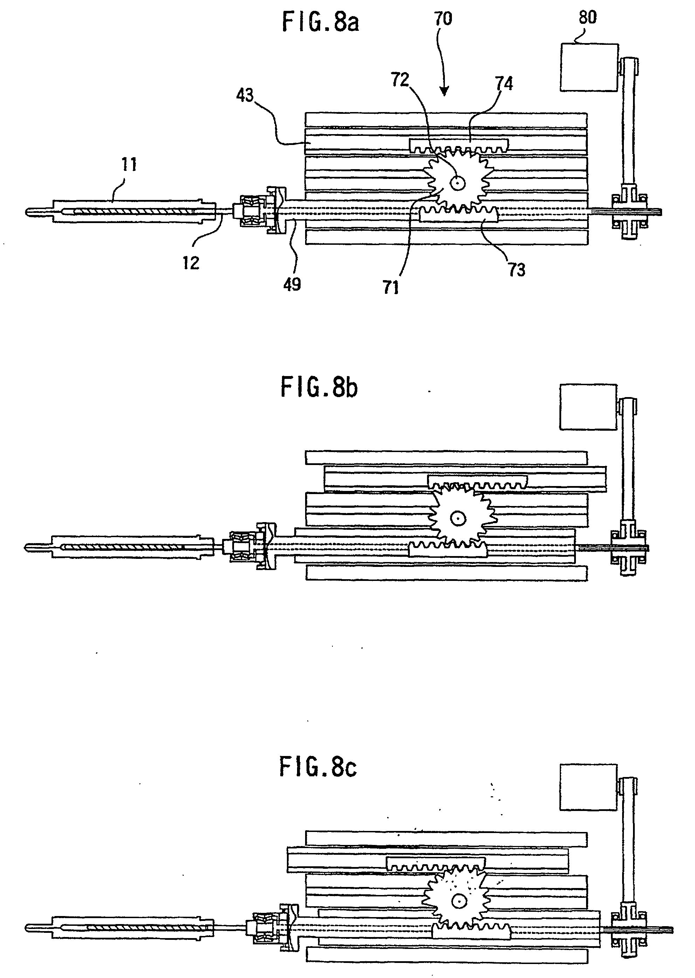

FIGS. 8a-8c show a fourth embodiment of the present invention. This fourth embodiment differs from the first embodiment in the linear-motion interconnecting mechanism. A linear-motion interconnecting mechanism 70 employing a rack-gear-rack mechanism is substituted for the linear-motion interconnecting mechanism 60 employing the linkage mechanism in the arrangement of the first embodiment.

A gear shaft 72 for rotatably supporting a gear 71 is fixed to the injection unit frame and racks 73 and 74 meshing with the gear 71 are fixed to the linear motion frame 49 of the obverse-motion linear motors and the linear motion frame 43 of the reverse-motion linear motors, respectively. A radius of pitch circle of a first segment of the gear 71 meshing with the rack 74 and a radius of pitch circle of a segment of the gear 71 meshing with the rack 73 are set so that a ratio of the former to the latter is equal to a ratio of total mass of the obverse motion elements and the total mass of the reverse motion elements, to cancel the reactive force in the axial direction of the injection screw 12.

FIG. 8a shows a state where the injection screw 12 is at the central position, FIG. 8b shows a state where the injection screw 12 is moved forward, and FIG. 8c shows a state where the injection screw 12 is moved backward.

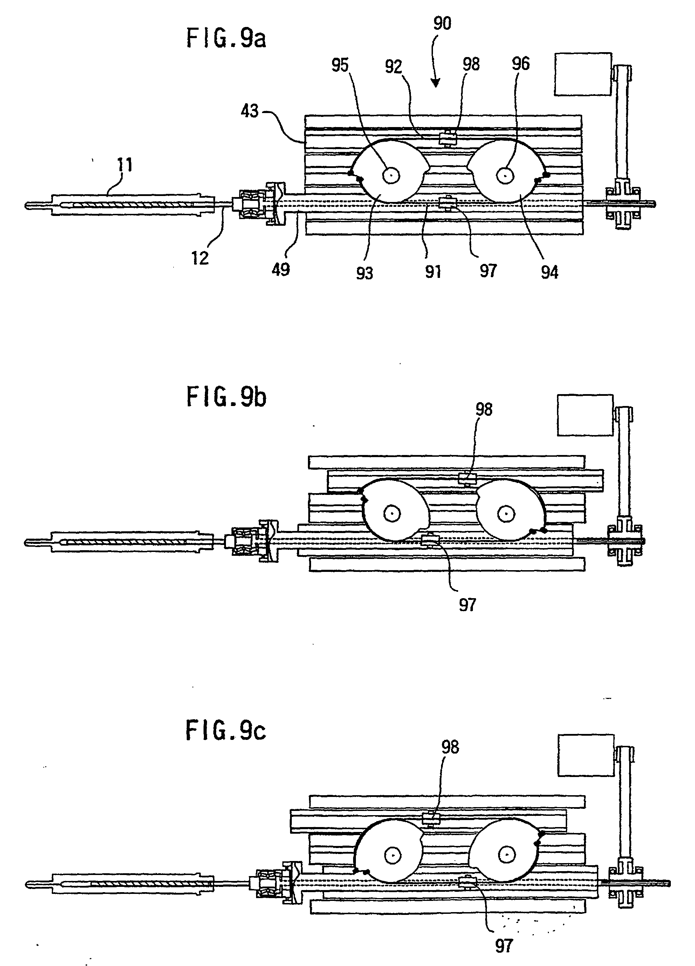

FIGS. 9a-9c show a fifth embodiment of the present invention. This embodiment differs from the first embodiment in that a linear-motion interconnecting mechanism 90 employing pulleys and belts is substituted for the linear-motion interconnecting mechanism 60 employing a linkage mechanism.

A steel-belt pulley shaft 95 for rotatably supporting a steel-belt pulley 93 and a steel-belt pulley shaft 96 for rotatably supporting a steel-belt pulley 94 are fixed to the injection unit frame. The steel-belt pulley 93 and the steel-belt pulley 94 are the same elements each having semi-circumferences of different radiuses. One end of a steel belt 91 is fixed to one end of one semi-circumference (smaller one in this embodiment) of the steel-belt pulley 93 and the other end of the steel belt 91 is fixed to one end of one semi-circumference (smaller one in this embodiment) of the steel-belt pulley 94. The steel belt 91 extends along parts of the smaller semi-circumferences of the steel-belt pulleys 91 and 94. A steel belt fixture 97 fixed to the linear motion frame 49 is fixed to the steel belt 91 at a middle portion thereof.

In the same manner, one end of a steel belt 92 is fixed to one end of the other semi-circumference (larger one in this embodiment) of the steel-belt pulley 93 and the other end of the steel belt 91 is fixed to one end of the other semi-circumference (larger one in this embodiment) of the steel-belt pulley 94. The steel belt 92 extends along parts of the larger semi-circumferences of the steel-belt pulleys 93 and 94. A steel belt fixture 98 fixed to the linear motion frame 43 is fixed to the steel belt 92 at a middle portion thereof.

A ratio of a radius of the semi-circumference on which the steel belt 92 is wound, to a radius of the semi-circumference on which the steel belt 91 is wound, is set to a ratio of the total mass of the obverse motion elements to the total mass of the reverse motion elements, so that a reactive force in acceleration and deceleration in the direction of the axis of the injection screw 12 is canceled.

FIG. 9a shows a state where the injection screw 12 is at the central position, FIG. 9b shows a state where the injection screw 12 is moved forward and FIG. 9c shows a state where the injection screw 12 is moved backward.

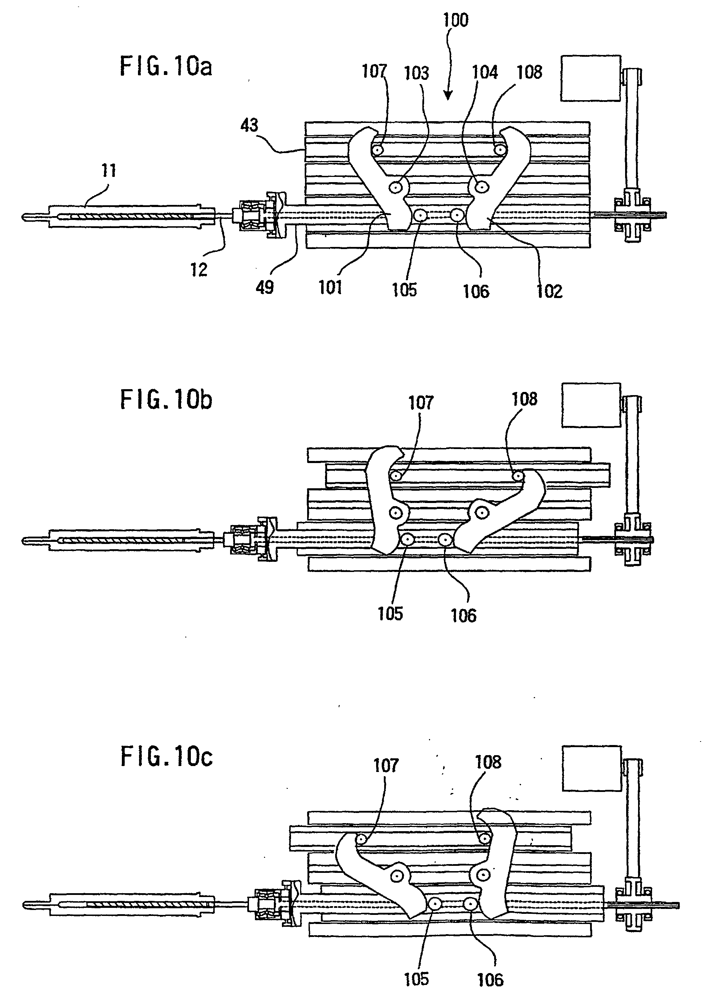

FIGS. 10a-10c show a sixth embodiment of the present invention. This sixth embodiment differs from the first embodiment in that the linear-motion interconnecting mechanism 60 employing the link mechanism is placed with a linear-motion interconnecting mechanism 100 employing levers (hereinafter referred-to as leverages).

Fulcrums 103, 104 are fixed to the injection molding unit frame and leverages 101, 102 are rotatably supported by the fulcrums 103, 104. The leverages 101, 102 have the same shape each having cam surfaces on one side. The leverages 101, 102 are pivoted at fulcrums 103, 104, respectively, so that the cam surfaces thereof confront each other. A cam follower 107 is fixed to the linear motion frame 43 of the reverse-motion linear motors and abuts on one of the cam surfaces of the leverage 101 with the fulcrum 103 therebetween. A cam follower 105 is fixed to the linear motion frame 49 of the obverse-motion linear motor and abuts on the other of the cam surfaces. Similarly, a cam follower 108 is fixed on the linear motion frame 43 and abuts on one of the cam surfaces of the leverage 102 with the fulcrum 104 therebetween, and a cam follower 106 is fixed on the linear motor frame 49 and abuts on the other cam surface of the leverage 102.

When respective servomotors are driven to move the injection screw 12 forward, the cam followers 107 and 108 move backward with the reverse-motion linear motion frame 43 and the cam follower 108 pushes the leverage 102 to rotate in a clockwise direction and the cam follower 106 is moved forward. The cam followers 105 and 106 are moved with the obverse-motion linear motion frame 49 and the cam follower 105 pushes the leverage 101 to rotate in a clockwise direction. In this motion, since the cam follower 107 is simultaneously moved backwardly with the reverse-motion linear motion frame 43, the leverage 101 rotates in the clockwise direction with the cam follower 107 in contact with the cam surface thereof.

When respective linear motors are driven to move the injection screw 12 backward, the obverse-motion linear motion frame 49 moves backward and the reverse-motion linear motion frame 43 moves forward, so that the cam follower 107 pushes the leverage 101 to rotate in a counterclockwise direction and the cam follower 105 is pushed backward. Since the cam follower 108 moves forward and the cam follower 106 moves backward, the leverage 102 rotates with the cam followers 106 and 108 in contact with the cam surfaces thereof.

In this sixth embodiment, a ratio of a distance between a straight line passing the cam followers 107 and 108 and a straight line passing the fulcrums 103 and 104, to a distance between a straight line passing the cam followers 105 and 106 and the straight line passing the fulcrums 103 and 104 is set to be equal to a ratio of the total mass of the obverse motion elements and the total mass of the reverse motion elements, so that the reactive force in the axial direction of the injection screw 12 is canceled.

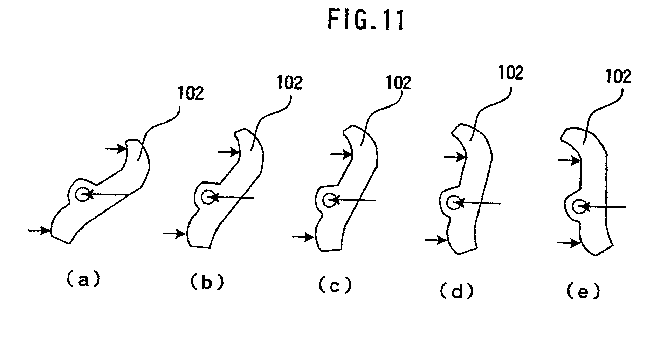

FIG. 11 shows details of the leverage shown in FIGS. 10a-10c. The cam surfaces of the leverage 102 are formed so that the directions of the pushing forces of the cam followers 106 and 108 are not changed in rotation of the leverage 102 from the state (a) to the state (e). With this arrangement, any forces perpendicular to the thrusts of the linear motors are not produced, to prevent an unnecessary force on the movable part and the movable part supporting member.

The foregoing embodiments are shown as examples of an injection molding machine where an injection screw, as a movable part of a machine, is driven by the driving device using linear motors. The driving device of the present invention is, however, applicable to any machine such as a machine tool, a manufacturing machine and a robot, as a driving device for driving a linearly movable part.

According to the present invention, a reactive force of a thrust of a linear motor in acceleration and deceleration is canceled or at least compensated within the driving device, so that no, or merely a reduced, reactive force is applied to a structure for supporting the driving device, thereby to prevent or reduce damage to the machine and thus elongate the life of the machine.

## Claims

1. A driving device for linearly moving a moveable part (12) of a machine, comprising:

   at least two linear-motion elements (43, 49; 31, 33; 49, 52) supported linearly moveably, one of the linear-motion elements (49; 33; 49) being connected to said moveable part (12) of the machine, and
   at least one linear motor for applying thrust to a first linear motion element (49; 33; 49) of said at least two linear-motion elements,

   **characterised in that**:

   said at least two linear-motion elements are supported linearly moveably in opposite directions;
   said at least one linear motor is arranged for applying opposite thrust to said first linear-motion element (49; 33; 49) and a second linear-motion element (43; 31; 52) of said at least two linear-motion elements; and
   a linear motion interconnecting mechanism (60; 70; 90; 100) is provided for interconnecting the opposite linear motions of said first and second linear-motion elements (43, 49; 31, 33; 49, 52).

2. A driving device according to claim 1,
   wherein said at least one linear motor has primary and secondary members both supported linearly movably, and said first linear-motion element (33) comprises one of said primary and secondary members and said second linear-motion element (31) comprises the other of said primary and secondary members.

3. A driving device according to claim 2,
   wherein said primary member has an excitation coil, and said secondary member has a magnet plate (32).

4. A driving device according to claim 1,
   wherein said at least one linear motor comprises obverse-motion and reverse-motion linear motors each having primary and secondary members, and said first linear-motion element (49) comprises one of the primary and secondary members of said obverse-motion linear motor, and said second linear-motion element (43; 52) comprises one of the primary and secondary members of said reverse-motion linear motor.

5. A driving device according to claim 4,
   wherein said primary members have excitation coils, and said secondary members have magnet plates (42, 44, 48, 50)

6. A driving device according to claim 4 or 5,
   wherein a set of two linear motors disposed in confronting relation to each other constitutes said obverse motion linear motor,' and a set of two linear motors disposed in confronting relation to each other constitutes said reverse-motion linear motor.

7. A driving device according to any preceding claim, wherein said at least two linear-motion elements include a third linear-motion element (56), said at least one linear motor applies thrusts to said first, second and third linear-motion elements (49, 52, 56) such that adjacent ones of the linear-motion elements move in directions opposite to each other, and said linear-motion interconnecting mechanism (60, 60') interconnects the opposite motions of the adjacent ones of the linear-motion elements (49, 52, 56).

8. A driving device according to any preceding claim, wherein said linear-motion interconnecting mechanism interconnects the opposite linear motions of said first and second linear-motion elements such that a ratio of a speed of a connection point (65) of said linear-motion interconnecting mechanism with said first linear-motion element, to a speed of a connection point (61) of said linear-motion interconnecting mechanism with said second linear-motionelement is set to an inverse of a ratio of a total mass (m1) of elements moving with said first linear-motion element to a total mass (m2) of elements moving with said second linear-motion element.

9. A driving device according to any preceding claim, wherein said linear-motion interconnecting mechanism comprises one of a linkage mechanism (60), a rack-gear-rack mechanism (70), a belt-pulley mechanism (90) and a leverage mechanism (100).

10. A driving device according to claim 9, wherein said linkage mechanism (60) has three links (66, 67, 68) connected serially.

11. A driving device according to claim 10,
wherein said three'links comprise a first link (68) connected to said first linear-motion element, a second link (67) pivoted on a stationary axis and a third link (66) connected to said second linear-motion element, and a ratio of a distance between a first straight line passing through a connection point (65) of said first link (68) with said first linear-motion element and a second straight line passing through a pivot point (63) of said second link (67), said first and second straight lines extending in the direction of thrust of said linear motor, to a distance between a third straight line passing through a connection point (61) of said third link (66) with said second linear-motion element extending in the direction of thrust of said linear motor, and said second straight line is set to an inverse of a ratio of a total mass (m1) of elements moving with said first linear-motion element to a total mass (m2) of elements moving with said second linear-motion element.

12. A driving device according to any preceding claim, wherein said machine comprises an injection molding machine.

**Patentansprüche**

1. Antriebsvorrichtung zum linearen Bewegen eines bewegbaren Teils (12) einer Maschine, welche Antriebsvorrichtung umfasst:

zumindest zwei Linearbewegungselemente (43, 49; 31, 33; 49, 52), die linear bewegbar getragen sind, wobei eines der Linearbewegungselemente (49; 33; 49) mit dem bewegbaren Teil (12) der Maschine verbunden ist, und
zumindest einen Linearmotor zum Ausüben eines Schubs auf ein erstes Linearbewegungselement (49; 33; 49) der zumindest zwei Linearbewegungselemente,

**dadurch gekennzeichnet, dass**

die zumindest zwei Linearbewegungselemente in entgegengesetzten Richtungen linear bewegbar getragen sind,
der zumindest eine Linearmotor zum Ausüben eines entgegengesetzten Schubs auf das erste Linearbewegungselement (49; 33; 49) und ein zweites Linearbewegungselement (43; 31; 52) der zumindest zwei Linearbewegungselemente angeordnet ist und
ein Linearbewegungs-Verbindungsmechanismus (60; 70; 90; 100) zum Miteinanderverbinden der entgegengesetzten Linearbewegungen der ersten und zweiten Linearbewegungselemente (43, 49; 31, 33; 49, 52) vorgesehen ist.

2. Antriebsvorrichtung nach Anspruch 1, wobei der zumindest eine Linearmotor Haupt- und Nebenteile hat, die beide linear bewegbar getragen sind, und das erste Linearbewegungselement (33) eines der Haupt- und Nebenteile

**EP 1 095 753 B1**

umfasst und das zweite Linearbewegungselement das andere der Haupt- und Nebenteile umfasst.

3. Antriebsvorrichtung nach Anspruch 2, wobei der Hauptteil eine Erregerspule hat und der Nebenteil eine Magnetplatte (32) hat.

4. Antriebsvorrichtung nach Anspruch 1, wobei der zumindest eine Linearmotor Vorderseitenbewegungs- und Rückseitenbewegungs-Linearmotoren umfasst, wovon jeder Haupt- und Nebenteile hat, und das erste Linearbewegungselement (49) einen der Haupt- und Nebenteile des Vorderseitenbewegungs-Linearmotors umfasst und das zweite Linearbewegungselement (43; 52) einen der Haupt- und Nebenteile des Rückseitenbewegungs-Linearmotors umfasst.

5. Antriebsvorrichtung nach Anspruch 4, wobei die Hauptteile Erregerspulen haben und die Nebenteile Magnetplatten (42, 44, 48, 50) haben.

6. Antriebsvorrichtung nach Anspruch 4 oder 5, wobei ein Satz von zwei Linearmotoren, die einander gegenüberstehend angeordnet sind, den Vorderseitenbewegungs-Linearmotor ausmacht und ein Satz von zwei Linearmotoren, die einander gegenüberstehend angeordnet sind, den Rückseitenbewegungs-Linearmotor ausmacht.

7. Antriebsvorrichtung nach einem der vorhergehenden Ansprüche, wobei die zumindest zwei Linearbewegungselemente ein drittes Linearbewegungselement (56) enthalten, der zumindest eine Linearmotor Schübe auf die ersten, zweiten und dritten Linearbewegungselemente (49, 52, 56) derart ausübt, dass benachbarte der Linearbewegungselemente sich in Richtungen entgegengesetzt zueinander bewegen, und der Linearbewegungs-Verbindungsmechanismus (60, 60') die entgegengesetzten Bewegungen der benachbarten der Linearbewegungselemente (49, 52, 56) miteinander verbindet.

8. Antriebsvorrichtung nach einem der vorhergehenden Ansprüche, wobei der Linearbewegungs-Verbindungsmechanismus die entgegengesetzten Linearbewegungen der ersten und zweiten Linearbewegungselemente derart miteinander verbindet, dass ein Verhältnis einer Geschwindigkeit eines Verbindungspunkts (65) des Linearbewegungs-Verbindungsmechanismus mit dem ersten Linearbewegungselement zu einer Geschwindigkeit eines Verbindungspunkts (61) des Linearbewegungs-Verbindungsmechanismus mit dem zweiten Linearbewegungselement auf einen reziproken Wert eines Verhältnisses einer Geamtmasse (m1) von Elementen, die sich mit dem ersten Linearbewegungselement bewegen, zu einer Gesamtmasse (m2) von Elementen, die sich mit dem zweiten Linearbewegungselement bewegen, eingestellt ist.

9. Antriebsvorrichtung nach einem der vorhergehenden Ansprüche, wobei der Linearbewegungs-Verbindungsmechanismus einen von Mechanismen, einen Gelenkmechanismus (60), einen Zahnstange-Zahnrad-Zahnstange-Mechanismus (70), einen Riemen-Riemenscheibe-Mechanismus (90) bzw. einen Hebel-Mechanismus (100), umfasst.

10. Antriebsvorrichtung nach Anspruch 9, wobei der Gelenkmechanismus (60) drei Gelenkteile (66, 67, 68) hat, die in Reihe miteinander verbunden sind.

11. Antriebsvorrichtung nach Anspruch 10, wobei die drei Gelenkteile ein erstes Gelenkteil (68), das mit dem ersten Linearbewegungselement verbunden ist, ein zweites Gelenkteil (67), das schwenkbar auf einer stationären Achse sitzt, und ein drittes Gelenkteil (66) umfasst, das mit dem zweiten Linearbewegungselement verbunden ist, und ein Verhältnis einer Distanz zwischen einer ersten Geraden, die durch einen Verbindungspunkt (65) des ersten Gelenkteils (68) mit dem ersten Linearbewegungselement verläuft, und einer zweiten Geraden, die durch einen Schwenkpunkt (63) des zweiten Gelenkteils (67) verläuft, wobei sich die ersten und zweiten Geraden in der Richtung des Schubs des Linearmotors erstrecken, zu einer Distanz zwischen einem Verbindungspunkt (61) des dritten Gelenkteils (66) mit dem zweiten Linearbewegungselement, das sich in der Richtung des Schubs des Linearmotors erstreckt, und der zweiten Geraden auf einen reziproken Wert eines Verhältnisses einer Gesamtmasse (m1) von Elementen, die sich mit dem ersten Linearbewegungselement bewegen, zu einer Gesamtmasse (m2) von Elementen, die sich mit dem zweiten Linearbewegungselement bewegen, eingestellt ist.

12. Antriebsvorrichtung nach einem der vorhergehenden Ansprüche, wobei die Maschine eine Spritzgießmaschine umfasst.

11

**Revendications**

1.  Un dispositif d'entraînement pour déplacer linéairement une partie mobile (12) d'une machine, comprenant :

    au moins deux éléments à mouvement linéaire (43, 49 ; 31, 33 ; 49, 52) supportés de manière linéairement mobile, un des éléments à mouvement linéaire (49 ; 33 ; 49) étant relié à ladite partie mobile (12) de la machine, et
    au moins un moteur linéaire pour appliquer une poussée à un premier élément à mouvement linéaire (49 ; 33 ; 49) desdits au moins deux éléments à mouvement linéaire,

    **caractérisé en ce que** :

    lesdits au moins deux éléments à mouvement linéaire sont supportés de manière linéairement mobiles dans des directions opposées ;
    ledit au moins un moteur linéaire est disposé pour appliquer une poussée opposée audit premier élément à mouvement linéaire (49 ; 33 ; 49) et à un second élément à mouvement linéaire (43 ; 31 ; 52) desdits au moins deux éléments à mouvement linéaire ; et
    un mécanisme d'interconnexion de mouvement linéaire (60 ; 70 ; 90 ; 100) est prévu pour interconnecter les mouvements linéaires opposés desdits premier et second éléments à mouvement linéaire (43, 49 ; 31, 33 ; 49, 52).

2.  Un dispositif d'entraînement selon la revendication 1, dans lequel ledit au moins un moteur linéaire présente des organes primaire et secondaire tous deux supportés de manière linéairement mobiles, et dans lequel ledit premier élément à mouvement linéaire (33) comprend un desdits organes primaire et secondaire et ledit second élément à mouvement linéaire (31) comprend l'autre desdits organes primaire et secondaire.

3.  Un dispositif d'entraînement selon la revendication 2, dans lequel ledit organe primaire comprend un bobine d'excitation, et ledit organe secondaire comprend un aimant plat (32).

4.  Un dispositif d'entraînement selon la revendication 1, dans lequel ledit au moins un moteur linéaire comprend des moteurs linéaires à mouvement renversé et à mouvement inverse présentant chacun des organes primaire et secondaire, et dans lequel ledit premier élément à mouvement linéaire (49) comprend un des organes primaire et secondaire dudit moteur linéaire à mouvement renversé et ledit second élément à mouvement linéaire (43 ; 52) comprend un des organes primaire et secondaire dudit moteur linéaire à mouvement inverse.

5.  Un dispositif d'entraînement selon la revendication 4, dans lequel lesdits organes primaires comprennent des bobines d'excitation, et lesdits organes secondaires comprennent des aimants plats (42, 44, 48, 50).

6.  Un dispositif d'entraînement selon la revendication 4 ou 5, dans lequel un jeu de deux moteurs linéaires disposés en relation de face à face l'un par rapport à l'autre constitue ledit moteur linéaire à mouvement renversé, et un jeu de deux moteurs linéaires en relation de face à face l'un par rapport à l'autre constitue ledit moteur linéaire à mouvement inverse.

7.  Un dispositif d'entraînement selon une quelconque revendication précédente, dans lequel lesdits au moins deux éléments à mouvement linéaire comprennent un troisième élément à mouvement linéaire (56), ledit au moins un moteur linéaire applique des poussées auxdits premier, second et troisième éléments à mouvement linéaire (49, 52, 56) de telle manière que les éléments adjacents parmi les éléments à mouvement linéaire se déplacent dans des direction opposées l'un par rapport à l'autre, et ledit mécanisme d'interconnexion de mouvement linéaire (60, 60') interconnecte les mouvement opposés des éléments adjacents parmi les éléments à mouvement linéaire (49, 52, 56).

8.  Un dispositif d'entraînement selon une quelconque revendication précédente, dans lequel ledit mécanisme d'interconnexion de mouvement linéaire interconnecte les mouvements linéaires opposées desdits premier et second éléments à mouvement linéaire de telle manière que le rapport d'une vitesse d'un point de liaison (65) dudit mécanisme d'interconnexion de mouvement linéaire avec ledit premier élément à mouvement linéaire, à une vitesse d'un point de liaison (61) dudit mécanisme d'interconnexion à mouvement linéaire avec ledit second élément à mouvement linéaire soit réglé à l'inverse d'un rapport d'une masse totale (m1) d'éléments se déplaçant avec ledit premier élément à mouvement linéaire à une masse totale (m2) d'éléments se déplaçant avec ledit second élément à mouvement linéaire.

9. Un dispositif d'entraînement selon une quelconque revendication précédente, dans lequel ledit mécanisme d'interconnexion de mouvement linéaire comprend l'un parmi un mécanisme d'embiellage (60), un mécanisme à crémaillère-roue dentée-crémaillère 70, un mécanisme à courroies-poulies (90) et un mécanisme à effet de levier (100).

10. Un dispositif d'entraînement selon la revendication 9, dans lequel ledit mécanisme d'embiellage (60) comprend trois biellettes (66, 67, 68) reliés en série.

11. Un dispositif d'entraînement selon la revendication 10, dans lequel lesdites trois biellettes comprennent une première biellette (68) reliée audit premier élément à mouvement linéaire, une seconde biellette (67) amenée à pivoter sur un axe fixe et une troisième biellette (66) reliée audit second élément à mouvement linéaire, le rapport d'une distance entre une première ligne droite passant par un point de liaison (65) de ladite première biellette (68) avec ledit premier élément à mouvement linéaire et une seconde ligne droite passant par un point de pivotement (63) de ladite seconde biellette (67), lesdites première et seconde lignes droites s'étendant dans la direction de la poussée dudit moteur linéaire, à une distance entre une troisième ligne droite passant par un point de liaison (61) de ladite troisième biellette (66) avec ledit second élément à mouvement linéaire s'étendant dans la direction de la poussée dudit moteur linéaire, et ladite seconde ligne droite est réglé à l'inverse d'un rapport d'une masse totale (m1) d'éléments se déplaçant avec ledit premier élément à mouvement linéaire à une masse totale (m2) d'éléments se déplaçant avec ledit second élément à mouvement linéaire.

12. Un dispositif d'entraînement selon une quelconque revendication précédente, dans lequel ladite machine comprend un machine de moulage à injection.

FIG.1

FIG.2a

FIG.2b

FIG.2c

## FIG.3a

## FIG.3b

## FIG.4

(a)　　　(b)　　　(c)　　　(d)　　　(e)

## FIG.5a

## FIG.5b

## FIG.5c

# FIG.6a

# FIG.6b

FIG.7a

FIG.7b

FIG.7c

**FIG.8a**

**FIG.8b**

**FIG.8c**

FIG.9a

FIG.9b

FIG.9c

FIG.10a

FIG.10b

FIG.10c

# FIG.11

(a)     (b)     (c)     (d)     (e)